# EUROPEAN PATENT APPLICATION

(11) **EP 2 682 651 A1**
(43) Date of publication of application: **08.01.2014**
(21) Application number: 12175108.5
(22) Date of filing: 05.07.2012
(51) Int. Cl.: F16K 1/04, F16K 27/02

(54) **A hydraulic valve**

(71) Applicant: Hyva Holding BV, 2400 AH Alphen aan de Rijn (NL)
(72) Inventor: Terpstra, Jan, 2263 CE Leidschendam (NL)
(74) Representative: De Vries & Metman

(57) **Abstract**

A hydraulic valve (1) comprises a housing (2) which is provided with an first line connection (3) and two separate second line connections (4, 5), each forming a canal with the first line connection (3), and a valve member (6) selectively mountable in one of the second line connections (4, 5) in a first position to close one of the canals, wherein the valve member (6) is movable in longitudinal direction in said one second line connection to a second position to close the other second line connection (4, 5).

## Description

The present invention pertains to a hydraulic valve.

A hydraulic valve between a first line connection and a second line connection as known from the prior art generally comprises an assembly of various parts that are assembled for the use of the valve in a specific orientation of the first line connection to further equipment connected to the second line connection. Often a separate valve is used and coupling pieces are used for connecting the valve to the further equipment. The change over from the use of one second line connection configuration to the use of an other second line connection configuration in a different orientation requires different coupling pieces that must either be provided separately and/or after assembling coupling pieces will be superfluous. The use of the valve with the various different coupling pieces for different orientations leads to logistic complications and additional costs.

In order to overcome this disadvantage the hydraulic valve is according to claim 1. In this way for different orientations of the first line connection and second line connection the same housing is used, and the valve member that closes one of the second line connections can also close the other second line connection and acts as a valve without additional costs so that there are less parts and all parts are used in the various orientations.

Due to the structure of the hydraulic valve according to the invention a user may select to mount the valve member at one of the second line connections having a preferred position at the housing. One of the second line connections functions as a real fluid second line connection and communicates with the first line connection when the corresponding canal is open, whereas the other second line connection is provided with the valve member which closes the corresponding canal and functions as a valve control for opening or closing the other canal. The selection between the functions of the second line connections depends on accessibility of the second line connections in specific applications, for example. The invention provides the opportunity to design a low-cost universal housing which can be used in different applications due to the exchangeability of the valve member between the second line connections.

The valve member may comprise a seal that cooperates with the inner surface of the second line connection, so that changing the valve member from the one second line connection to the other second line connection is easy and leakage is prevented.

The centre lines of the respective second line connections may extend in different mutual directions, and in a specific embodiment the centre lines extend perpendicularly to each other.

The centre line of one of the second line connections may have the same direction as the centre line of the first line connection. In a specific embodiment the centre line of one of the second line connections coincides with the centre line of the first line connection. Of course, the first line connection and the one of the second line connections are directed in opposite directions.

The second line connections may comprise a tube in which the valve member is mountable. Numerous manners of mounting the valve member in the tubular second line connections are conceivable.

In a practical embodiment the valve member comprises a closure body for closing the other canal and an activating member for displacing the closure body with respect to the corresponding second line connection.

The activating member and the closure body may form an integral piece, wherein the valve member and the second line connections have mating external and internal threads, respectively. This provides the opportunity to displace the closure body with respect to the housing in its longitudinal direction along its centre line by means of rotating the valve member about its centre line.

Alternatively, the activating member is formed by a bolt, which is rotatably mounted to the second line connection at a fixed location thereof, wherein the bolt mates with an internal thread of the closure body. In this case the closure body is translatable within the housing upon rotating the bolt, whereas the bolt is not moveable in its longitudinal direction.

The invention will hereafter be elucidated with reference to drawings showing embodiments of the invention very schematically.
Fig. 1 is a frontal view of an embodiment of a hydraulic valve according to the invention.
Fig. 2 is a cross-sectional view of the embodiment of Fig. 1 along the line II-II in Fig. 1, illustrating an open condition of the valve.
Fig. 3 is a similar view as Fig. 2, but illustrating a closed condition of the valve.
Figs. 4-6 are similar views as Figs. 1-3, respectively, but illustrating the use of the valve in a different configuration.
Fig. 7 is a side view of the embodiment of Fig. 1 to which a hydraulic tube is attached.
Figs. 8-13 are similar views as Figs. 1-6, respectively, but illustrating an alternative embodiment of the hydraulic valve according to the invention.
Figs. 14-20 are similar views as Figs. 1-7, respectively, but illustrating another alternative embodiment of the hydraulic valve according to the invention.
Fig. 21 is a perspective view of a practical application of the hydraulic valve according to the invention.

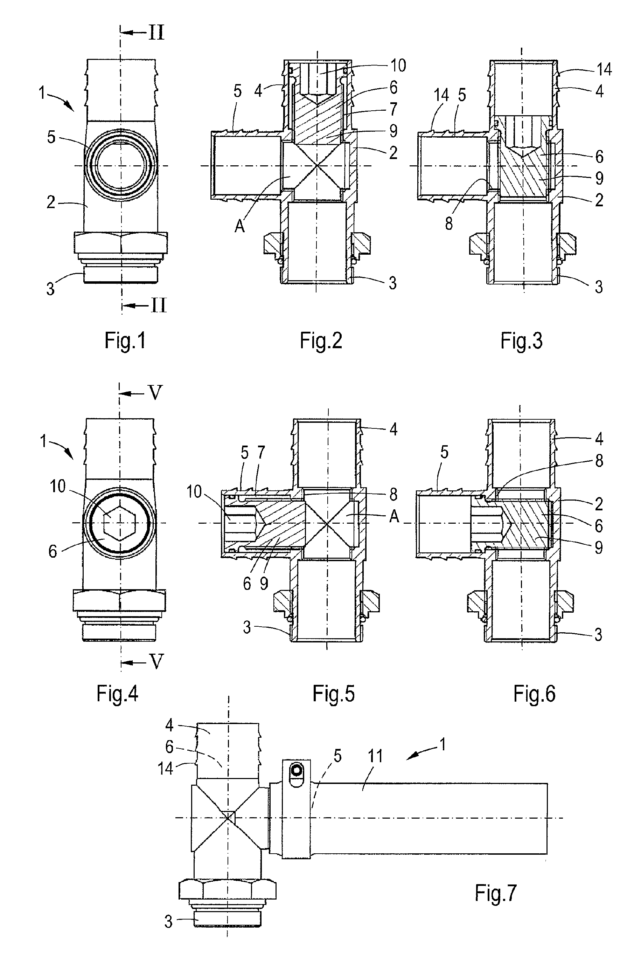

Figs. 1-7 show an embodiment of a hydraulic valve 1 according to the invention. The hydraulic valve 1 comprises a T-shaped housing 2 which is provided with an inlet 3, a first outlet 4 and a second outlet 5. The inlet 3 and the first and second outlets 4, 5 are tubular and communicate with a central cavity in the housing 2. The outlets 4, 5 each form a canal with the inlet 3. The hydraulic valve 1 further comprises a valve member 6 which is mountable to the first outlet 4 as well as to the second outlet 5. In the assembled condition as shown in Figs. 1-3 and 7 the valve member 6 is mounted in the first outlet 4. In the configuration according to Figs. 4-6 the valve member 6 is mounted in the second outlet 5. The first and second outlets 4, 5, the housing 2 and the valve member 6 are adapted such that the valve member 6 is interchangeable between the first and second outlets 4, 5.

In the configuration of the valve 1 as shown in Figs. 1-3 the valve member 6 can be adjusted between a first or open position as illustrated in Fig. 2 and a second or closed position as illustrated in Fig. 3. In the open position the inlet 3 communicates with the second outlet 5. The valve member 6 enables a user to open the canal of the second outlet 5 with the inlet 3. In other words the valve member 6 enables a user to open a flow-through area A in the housing 2 between the inlet 3 and the second outlet 5. Furthermore, the valve member 6 closes the canal of the first outlet 4 with the inlet 3 in both the first and second position of the valve member 6. In the configuration according to Figs. 4-6 the canal of the first outlet 4 with the inlet 3, or the flow-through area A between the inlet 3 and the first outlet 4 can be opened and closed by means of the valve member 6. In this configuration the valve member 6 closes the canal of the second outlet 5 with the inlet 3 in both the first and second position of the valve member 6.

Due to the interchangeability of the valve member 6 the hydraulic valve 1 has a universal housing 2, but it can be used for applications where a flexible selection of the orientation of the outlet with respect to the inlet 3 is desired. More specifically, the centre lines of the first outlet 4 and the second outlet 5 extend in different mutual directions. In the embodiment according to Figs. 1-7 the centre lines extend perpendicularly to each other. Furthermore, the centre line of the first outlet 4 coincides with the centre line of the inlet 3.

The valve member 6 of the embodiment as shown in Figs. 1-7 is provided with an external thread 7 that mates with an internal thread 8 of the housing 2 at the first and second outlets 4, 5. Furthermore, the valve member 6 comprises a closure body 9 for closing the flow-through area A between the inlet 3 and the first outlet 4 or between the inlet 3 and the second outlet 5. In this case the valve member 6 is made of a single piece and the closure body 9 is formed by an end portion of the valve member 6. The valve member 6 is also provided with an activating member 10 which comprises a socket head for screwing the valve member 6 with respect to the housing 2 such that the closure body 9 is displaced with respect to the corresponding first or second outlet 4, 5. The socket head may be replaced by alternative tool receivers, such as a groove for receiving a screw driver bit.

Fig. 7 shows a condition in which a hydraulic hose or tube 11 is attached to the hydraulic valve 1. The outer surfaces of the outlets 4, 5 comprise ridges 14 for fixating the tube 11. In this embodiment the hydraulic valve 1 in fact forms an elbow pipe including an integrated closure valve.

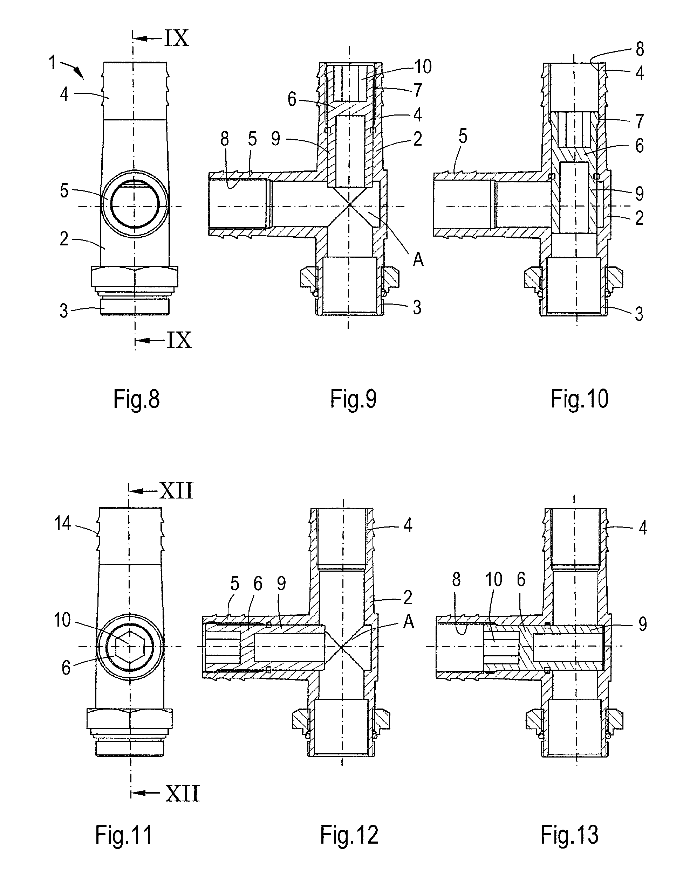

Figs. 8-13 show an alternative embodiment of the hydraulic valve 1. In this embodiment the first and second outlets 4, 5 comprise extended tubes with respect to the relatively short tubular first and second outlets 4, 5 of the embodiment according to Figs. 1-7. The valve member 6 is extended correspondingly. It is noted that the reference signs in Figs. 8-13 are similar as used in Figs. 1-7 for corresponding parts. The valve member 6 is provided with an external thread 7 at its upper end portion remote from the closure body 9, whereas the corresponding internal thread 8 of the housing 2 at the first and second outlets 4, 5 are located at the entrance of the tubular first and second outlets 4, 5. The closure body 9 is formed by a cylindrical end portion of the valve member 6 remote from the entrance of the corresponding outlet 4, 5 and is free from an external thread. Upon rotating the valve member 6 with respect to the housing 2 the closure body 9 will open or close the flow-through area A between the inlet 3 and one of the first or second outlets 4, 5.

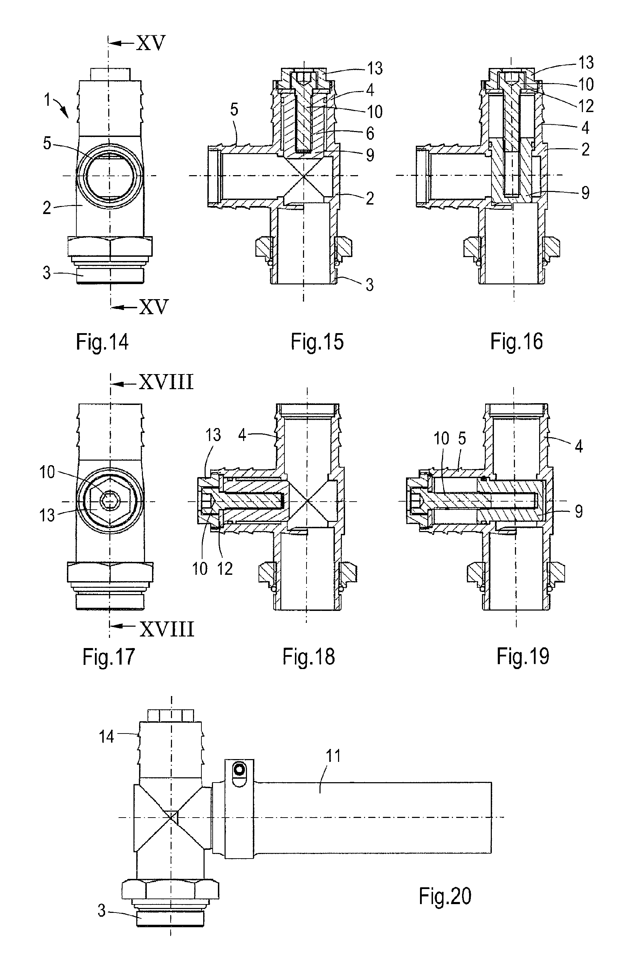

Figs. 14-20 show another alternative embodiment of the hydraulic valve 1. In this embodiment the valve member 6 comprises separate parts. The activating member 10 is formed by a bolt, which is rotatably mounted to the first or second outlet 4, 5 at a fixed location thereof. The bolt mates with an internal thread of the closure body 9 and the closure body 9 is translatable within the housing. Since the activating member 10 is rotatable with respect to the housing 2 at a fixed location the closure body 9 is displaced within the corresponding first or second tubular outlet 4, 5. The activating member 10 remains at the fixed location by means of a stop collar 12 and a closing plug 13 which are mounted to the housing 2 at the corresponding first or second outlet 4, 5. The activating member 10 or bolt comprises a socket head for rotating the activating member 10 with respect to the housing 2.

In all of the embodiments as described hereinbefore and shown in the accompanying figures the valve member 6 may be sealed with respect to the housing 2 in different manners. The valve member 6 comprises a seal that cooperates with the inner surface of the corresponding outlet 4, 5, so that changing the valve member 6 from the one outlet to the other outlet is easy and leakage is prevented. In the embodiments as shown in the figures the seals comprise O-rings, made of rubber, or alternative material.

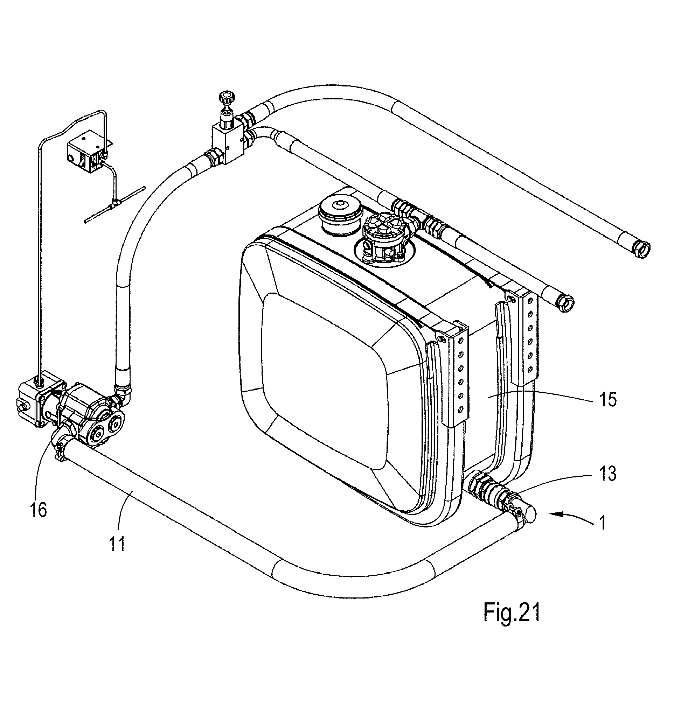

In all of the embodiments as described hereinbefore and shown in the accompanying figures the inlet 3 comprises a coupling to couple and connect the hydraulic valve 1 to a mounted construction, for instance to a tank. Fig. 21 illustrates a part of a hydraulic system on a truck, in which the hydraulic valve 1 is applied. The hydraulic system comprises a tank 15 and a pump 16. The hydraulic valve 1 is located close to the tank 15 and communicates with the pump 16 through the hydraulic hose 11. In case of maintenance of the hydraulic system the hose 11 should be disconnected from the tank 15 without emptying the tank 15. This can be done easily by means of closing the hydraulic valve 1 before disconnecting the hose 11 from the housing 2 thereof.

The practical application as shown in Fig. 21 also illustrates the flexibility of the hydraulic valve 1 according to the present invention. If in an alternative configuration of the hydraulic system the hose 11 approaches the tank 15 frontally instead of laterally as shown in Fig. 21 the valve member 6 and the hose 11 can be simply changed to the other outlets.

The shown embodiments all concern the situation wherein the inlet 3 can be in line with or perpendicular to the outlet 4 that is in use for connecting to the hose 11 and that the other outlet 4 is used for mounting the valve member 6. It will be clear to the skilled man that the invention also concerns the situation wherein there are two inlets and one outlet and wherein one of the inlets is used for mounting the valve member 6. Further in the shown embodiments the valve member 6 is moved in the housing 2 and fixed in a position using screw thread. Moving the valve member 6 in the housing 2 can also be done manually by sliding using a handle or similar or by using some drive means. Positioning the valve member 6 in the housing 2 in a closed or open position can be done in many ways such as using a clamp, a locking pin or spring, a bayonet catch or some drive means.

The parts of the hydraulic valve may be made of brass or plastic, but alternative materials such as fibre-reinforced polymers or the like are conceivable.

From the foregoing it will be apparent that the invention provides a flexible and low-cost hydraulic valve having a universal housing, but which can be used in different applications due to the exchangeability of the valve member.

The invention is not restricted to the above-described embodiment as shown in the drawings, which can be varied in several ways without departing from the scope of the invention. For example, the hydraulic valve can be provided with more than two outlets.

## Claims

1. A hydraulic valve (1), comprising a housing (2) which is provided with a first line connection (3) and two separate second line connections (4, 5), each forming a canal with the first line connection (3), and a valve member (6) selectively mountable in one of the second line connections (4, 5) in a first position to close one of the canals, wherein the valve member (6) is movable in its longitudinal direction in said one second line connection (4, 5) to a second position to close the other canal.

2. A hydraulic valve (1) according to claim 1, wherein the valve member (6) comprises a seal that cooperates with the inner surface of the second line connection (4, 5).

3. A hydraulic valve (1) according to claim 1 or 2, wherein the centre lines of the respective second line connections (4, 5) extend in different mutual directions.

4. A hydraulic valve (1) according to claim 3, wherein said centre lines extend perpendicularly to each other and preferably intersect.

5. A hydraulic valve (1) according to claim 3 or 4, wherein the centre line of one of the second line connections (4, 5) has the same direction as the centre line of the first line connection (3).

6. A hydraulic valve (1) according to one of the preceding claims, wherein each of the second line connections (4, 5) comprises a tube in which the valve member (6) is mountable.

7. A hydraulic valve (1) according to one of the preceding claims, wherein the valve member (6) comprises a closure body (9) for closing the other canal and an activating member (10) for displacing the closure body (9) with respect to the corresponding second line connection (4, 5).

8. A hydraulic valve (1) according to claim 7, wherein the activating member (10) and the closure body (9) form an integral piece, and wherein the valve member (6) and the second line connections (4, 5) have mating external (7) and internal threads (8), respectively.

9. A hydraulic valve (1) according to claim 7, wherein the activating member (10) is formed by a bolt, which is rotatably mounted to the second line connection (4, 5) at a fixed location thereof, which bolt mates with an internal thread of the closure body (9).

10. A hydraulic valve (1) according to one of the preceding claims, wherein the outer surfaces of the second line connections (4, 5) comprise ridges for fixating a hose (11).

11. A hydraulic valve (1) according to one of the preceding claims, wherein the first line connection (3) comprises a coupling to couple and connect the hydraulic valve (1) to a mounted construction, for instance to a tank.
